# EUROPEAN PATENT APPLICATION

(11) **EP 1 950 250 A1**
(43) Date of publication of application: **30.07.2008**
(21) Application number: 06822130.8
(22) Date of filing: 24.10.2006
(51) Int. Cl.: C08L 101/00, C08J 3/20

(54) **POLYMER STRUCTURE WHOSE SURFACE AND/OR INTERFACE IS MODIFIED, AND METHOD FOR PRODUCING SAME**

(30) Priority: 25.10.2005 JP 2005309534; 28.02.2006 JP 2006051555
(71) Applicant: Kyusyu University, Fukuoka-shi, Fukuoka 812-8581 (JP); Nissan Chemical Industries, Ltd., Chiyoda-ku, Tokyo 101-0054 (JP)
(72) Inventor: TANAKA, Keiji, Fukuoka-shi Fukuoka 812-8581 (JP); NAGAMURA, Toshihiko, Fukuoka-shi Fukuoka 812-8581 (JP); OZAWA, Masaaki, Funabashi-shi Chiba 274-0062 (JP); TANAKA, Akihiro, Funabashi-shi Chiba 274-0062 (JP)
(74) Representative: HOFFMANN EITLE
(86) International application number: PCT/JP2006/321150
(87) International publication number: WO 2007/049608

(57) **Abstract**

There is provided a novel, simple, general-purpose technique capable of being applied to the modification of the polymer surface and/or interface.

A polymer structure whose surface and/or interface is modified is obtained by mixing a branched polymer (preferably a dendritic polymer, a comb-like polymer or a hyperbranched polymer) into a linear polymer as a matrix polymer to concentrate the branched polymer on the surface and/or interface of the matrix polymer.

## Description

### TECHNICAL FIELD

The present invention relates to a novel technique which can be applied for modifying the surface and/or interface of a polymer.
The polymer structure of the present invention in which the surface and/or interface is modified: has such characteristics that on the surface or interface of the structure, not only can be imparted wear resistance, lubricity, chemicals resistance, anticorrosion property, antistatic property, adhesive property/adhesion, light reflection preventing property, light shielding property and etching resistance, but also can be controlled hydrophilicity and lipophylicity, optical reflectance, light extraction efficiency, alkali-developing property, surface hardness; and is suitably utilized as a molded material such as electric and electronic parts, automobile parts, optical controlling parts, parts for printing apparatus, film/sheet materials, fiber materials; as a thin film material such as semiconductor materials, display materials and materials for an electronic device; and as a gradient material in which a refractive index, a dielectric constant, a thermal expansion coefficient, magnetic properties and the like are controlled.

### BACKGROUND ART

Polymer (macromolecule) materials are recently much more utilized in many fields. Accompanying such a trend, according to each of the needs, together with properties of polymers as a matrix, properties of the surface or interface of the polymer have become important. For example, properties such as adhesive property, adhesion, nonviscosity, antistatic property, water shedding/oil shedding quality, hydrophilicity, sliding property, biocompatibility and the like are required for the surface or interface of the polymer.

For imparting properties as described above to the surface or interface of the polymer, conventionally various methods for modifying the surface (interface) of the polymer are known (for example, Non Patent Document 1). However, many of such methods require physical means represented by the irradiation of various energy rays, chemical treatments using a reaction with substances different from the matrix polymer or a graft polymerization, or cumbersome operations consisting of the combination thereof, and are expensive (for example, Patent Documents 1 to 3).

Further, techniques employed conventionally for modifying the polymer surface (interface) are dedicated to the purpose of modifying with respect to a specific physical property, and there can be not found a technique based on a principle capable of being applied commonly to modifications of various surface (interface) properties. [Non Patent Document 1] "Surface Modification of Polymer and Application Thereof" under the general editorship of Mitsuo Kakuta, published by CMC Publishing Co., Ltd. in 2001, June
[Patent Document 1] Japanese Translation of PCT International Application No. JP-T-2005-511876
[Patent Document 2] Japanese Translation of PCT International Application No. JP-T-2005-511875
[Patent Document 3] Japanese Patent Application Publication No. JP-A-2003-2994

### DISCLOSURE OF THE INVENTION

### [Problems to be Solved by the Invention]

The object of the present invention is to provide a novel, simple, general-purpose technique capable of being applied to the modification of the polymer surface and/or interface.

### [Means for Solving Problems]

The present inventors have made extensive and intensive physicochemical studies with respect to polymer mixtures, and as a result, found a way to localize functional molecules on the surface and interface of a polymer material by adding another polymer having functionality to the polymer material, which has led to the present invention.

Thus, the present invention provides a polymer structure in which a matrix polymer consisting of a linear polymer contains a branched polymer, characterized in that the branched polymer is concentrated on the surface and/or interface of the matrix polymer.

The present invention provides further also a method for producing the polymer structure as described above, characterized in that the surface and/or interface of the polymer structure is modified by mixing a branched polymer into a linear polymer as the matrix polymer to concentrate the branched polymer on the surface and/or interface of the matrix polymer.

### [Effects of the Invention]

According to the present invention, by such a simple operation as mixing a branched polymer into the matrix polymer, the branched polymer can be concentrated on the surface and/or interface of the matrix polymer, so that by utilizing this phenomenon, a polymer structure of an objective matrix polymer in which various surface (interface) properties according to the needs are modified, can be obtained.

### BEST MODES FOR CARRYING OUT THE INVENTION

The branched polymer used in the present invention is a macromolecule exhibiting a molecular structure in which the molecule is extended not in a single direction, but in a plural directions, and referring generally to polymers known as hyperbranched polymers (hyperbranched macromolecules), namely, a dendritic polymer (dendritic macromolecule), a comb-like polymer or a hyperbranched polymer. These polymers may be used in a combination of two or more types thereof.
The branched polymer has preferably at least one polar functional group selected from the group consisting of a hydroxyl group, a carboxyl group, an amino group, a thiol group, a halogen atom and a dithiocarbamate group.

Here, the dendritic polymer (dendritic macromolecule) is generally known as the dendrimer and means a sphere-shaped macromolecule in which the molecule radiates outwards. Further, the comb-like polymer means a polymer in which side groups (side chains) are relatively regularly bonded to the main chain and which is totally consisting of a comb-shaped molecule structure. Further, the hyperbranched polymer means a polymer consisting of a highly branched structure and many types of them are generally synthesized by a self-condensation of an AB₂-type monomer. However, the principle of the present invention is not limited to the above-described hyperbranched polymers. As is apparent from the following descriptions, the principle is applicable to any type of polymeric compounds so long as the molecules of such compound are branched and extended in a plural directions, although their advantageous effects may vary.

The hyperbranched polymer generally refers to a highly branched polymer obtained by, through a condensation, addition or insertion reaction, polymerizing either an ABx-type compound (such as AB₂, AB₃) having in one molecule thereof, one A functional group and two or more B functional groups capable of reacting with the A functional group, or an AB*-type compound containing one polymerization site and one initiator. AB*-type molecule is a compound in which an A functional group as the polymerization site reacts with a B* functional group as the initiator and after the reaction, though the A functional group disappears, the B* maintains a reactivity as the B* by an elimination or addition even after the reaction. Further, for example, in an AB₂-type compound, when the A functional group is a carboxyl group, the B functional group may be an amino group and in this case, the resultant polymer is a hyperbranched polyamide. In the AB*-type compound, when the A functional group is a styrenic double bond, the B* functional group may be a dithiocarbamate group and in this case, the resultant polymer is a hyperbranched polystyrene. Further similarly, in the AB*-type compound, when the A functional group is a methacrylic double bond, the B* functional group may be a dithiocarbamate group and in this case, the resultant polymer is a hyperbranched polymethacrylate.

Examples of the structure of the hyperbranched polymer include structures as described in edited by Masahiko Okada "Science and Function of Dendrimer" (published by IPC in 2000) p.79-116, such as a polyphenylene structure, a polyester structure, a polycarbonate structure, a polyether structure, a polythioether structure, a polyetherketone structure, a polyethersulfon structure, a polyamide structure, a polyetheramide structure, a polyamideamine structure, a polyurethane structure, a polyurea structure, a polysiloxysilane structure, a polycarbosilane structure, a polyethynylene structure, a polyphenylenevinylene structure, a polyaniline structure, a polyacrylate structure, a polymethacrylate structure, a polystyrene structure and a polyamine structure.

Examples of a hyperbranched polymer preferably used in the present invention include those represented by the following general formulae (1) and (4) to (11), but are not limited to them. Hyperbranched polymers belonging to those represented by the formulae (1) and (4) to (11) are available from Nissan Chemical Industries, Ltd. under a trade name Optbeads Series.

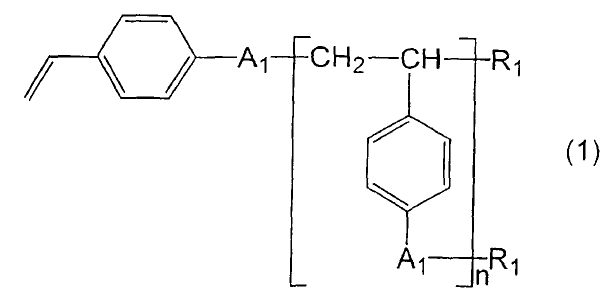

where R₁ represents at least one selected from the group consisting of a hydrogen atom, a halogen atom, a thiol group and a dithiocarbamate group; A₁ represents a (C 1 to 20) linear, branched or cyclic alkylene group which may contain an ether bond or an ester bond; and n represents a number of a recurring unit structure and is an integer of 2 to 100,000. 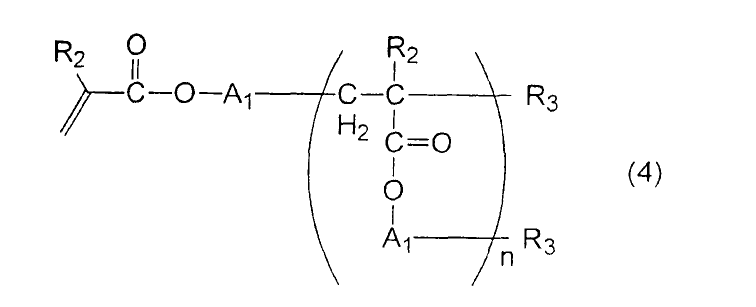 where R₂ represents a hydrogen atom or a methyl group; R₃ represents a hydrogen atom or a dithiocarbamate group; and A₁ and n are the same as defined in the formula (1). 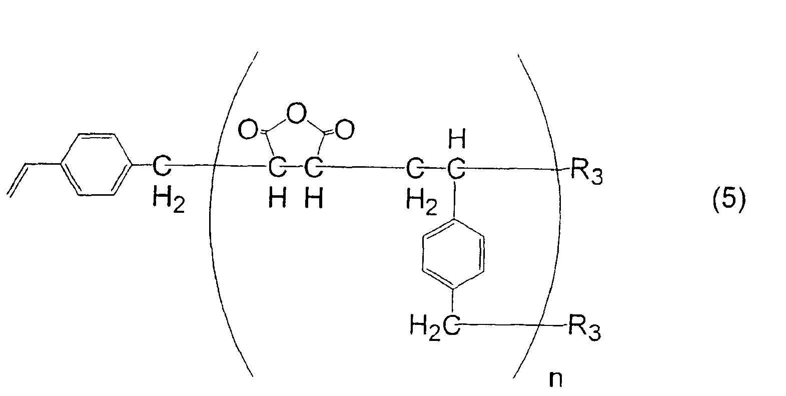 where R₃ and n are the same as defined in the formula (4). 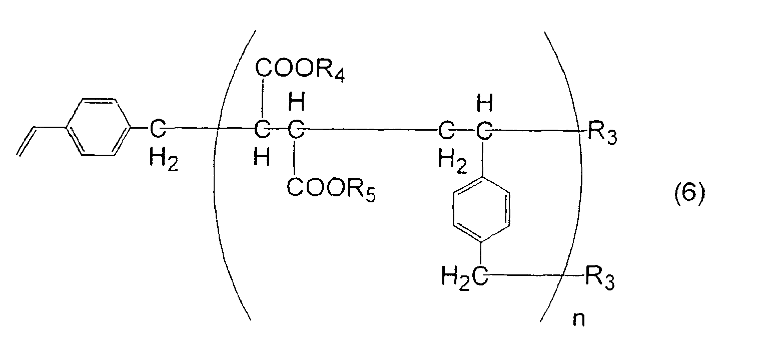 where R₃ and n are the same as defined in the formula (4); and R₄ and R₅ individually represent a hydrogen atom or a metal atom.
Further, a hyperbranched polymer having a structure represented by the following formula (7) as a polymerization initiation site and having a recurring unit in a linear chain structure represented by the following formula (8) where the total number of the recurring unit in the linear chain structure is an integer of 1 to 100,000 and a recurring unit in a branched structure represented by the following formula (9) where the total number of the recurring unit in the branched structure is an integer of 2 to 100,000 can be also used. 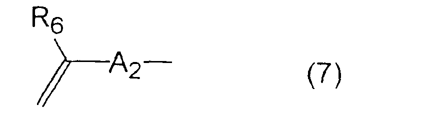 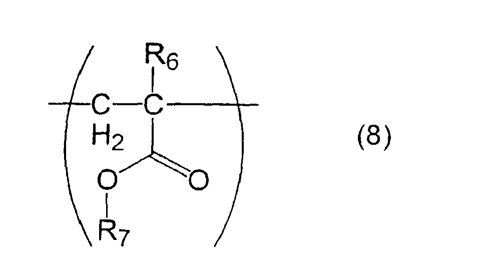 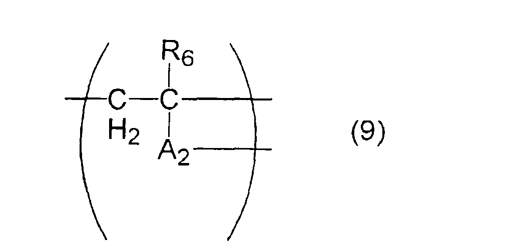 In the above chemical formulae (7) to (9), R₆ represents a hydrogen atom or a methyl group; R₇ represents a hydrogen atom, a (C 1 to 20) linear or branched hydroxyalkyl group, or a (C 3 to 20) linear or branched alkyl group containing epoxy group; and A₂ represents a structure represented by the following formula (10) or (11). 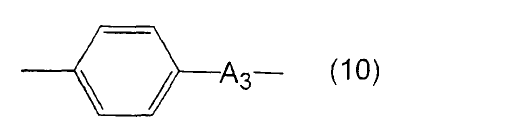 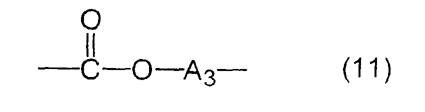 In the above chemical formulae (10) to (11), A₃ represents a (C 1 to 20) linear, branched or cyclic alkylene group which may be contain an ether bond or an ester bond.

Examples of the dendrimer structure include various structures described in G.R.Newkome et. al. "Dendrimers and Dendrons" (published by WILLY-VCH in 2001); a polybenzylether dendrimer structure having a dioxybenzyl group (such as 3,5-dioxybenzyl group) as a recurring unit as reported in C.J.Hawker et. al. "J. Am. Chem. Soc. (1990), Vol. 112, p. 7638-7647"; a polyetherketone dendrimer structure having various recurring units as reported in A. Morikawa et. al. "Macromolecules (1993), Vol. 26, p. 6324-6329", T.M. Miller et. al. "J. Am. Chem. Soc. (1993), Vol. 115, p.356-357", C.J. Hawker et. al. "Macromolecules (1996), Vol. 29, p. 4370-4380", A. Morikawa "Macromolecules (1998), Vol. 31, p. 5999-6009", A. Morikawa et. al. "Macromolecules (1999), Vol. 32, p. 1062-1068", A. Morikawa et. al. "Polymer Journal (2000), Vol. 32, p. 234-242", and A. Morikawa et. al. "Polymer Journal (2000), Vol. 32, p. 255-262"; a polyamideamine dendrimer structure as reported in D.A. Tomalia et. al. "Angew. Chem. Int. Ed. Engl. (1990) Vol. 29, p 138-175"; a polypropyleneimine dendrimer structure as reported in E.M.M. de Brabander-van den Berg et. al. "Angew. Chem. Int. Ed. Engl. (1993) Vol. 32, p 1308"; an aliphatic polyether dendrimer structure as reported in M. Jayaraman et. al. "J. Am. Chem. Soc. (1998) Vol. 120, p 12996-12997"; and an aliphatic polyester dendrimer structure as reported in H. Ihre et. al. "Macromolecules (1998) Vol. 31, p 4061-4068".

In the present invention, a matrix polymer consisting of a linear polymer is mixed with the above-described branched polymer. Though with respect to the used linear and branched polymers, chemical structures of constituting units thereof are preferably common to or similar to each other, the present invention can be also applied, when the two types of polymers are not necessarily in such a relationship. In other words, by using a system in which an apparent phase separation structure is not formed when the linear polymer has been mixed with the branched polymer, the present invention can be applied to any case.

In the description of the present invention, "surface" means an interface between the matrix polymer and a gas (normally air), and "interface" means an interface between the matrix polymer and a solid.
Further, the form of the objective polymer structure of the present invention is not particularly limited and examples of the form include various forms such as a film, a membrane, a sheet, a sphere, a granule, a fiber and a molded article.

As described above, in the present invention, as a linear polymer as the matrix polymer and as a branched polymer added to and mixed with the linear polymer, various types of polymers can be used. Examples of the used polymer include a vinyl chloride resin, a vinylidene chloride resin, a vinyl acetate resin, polyvinyl alcohol, polyvinyl acetal, polystyrene, an AS resin, an ABS resin, a methacrylic resin, polyethylene, polypropylene, a fluoro resin, polyamide, polyacetal, polycarbonate, denatured polyphenyleneether, polysulfone, saturated polyester, polyphenylene sulfide, a liquid crystal plastic, polyimide, polyurethane, a silicone resin, an epoxy resin, a diarylphthalate resin, an unsaturated polyester, a phenolic resin, polybutadiene, polyisoprene, a natural rubber, a chloroprene rubber, an ethylene/propylene rubber, a nitrilebutadiene rubber, a fluorine rubber, a butyl rubber, and a copolymer thereof. Needless to say, the used polymer is not limited to these polymers.

The amount of the branched polymer added to (mixed with) the linear polymer is varied depending on the type and characteristic (physical property) to be modified of the linear and branched polymers and the like. Generally, a maximum adding amount thereof to the linear polymer (matrix polymer) is 25 % by mass, preferably 15 % by mass, more preferably 10 % by mass. A minimum adding amount thereof is 0.1 % by mass, preferably 0.5 % by mass, more preferably 1 % by mass. When the adding amount is within the above range, it is suitable to produce a structure in which the branched polymer is concentrated on the surface and/or interface of the matrix polymer.

As described above, in the present invention, since the branched polymer is selectively concentrated on the surface and interface of the matrix polymer constituting the polymer structure, based on such a phenomenon, the surface and/or interface of the polymer structure can be modified. And as described in the following
(1) to (7), the present inventors clarify parameters controlling the degree of the concentration of the branched polymer. Thus according to the present invention, by employing systems of the linear polymer (matrix polymer) / the branched polymer corresponding to those parameters, the amount (fraction) of the branched polymer on the surface and interface of the matrix polymer can be controlled, so that an objective polymer structure in which modified properties are controlled can be obtained.

(1) Total molecular weight: the smaller the total molecular weight of the branched polymer compared to the molecular weight of the linear polymer, the more the branched polymer is concentrated on the surface and interface.
(2) Length of branched (side) chain: when the length of a branched (side) chain of the branched polymer is shorter than that of the linear polymer as the matrix, the concentration becomes remarkable.
(3) Number of terminal groups: the more the number of terminal groups in one molecule of the branched polymer, the more advantageous the concentration on the surface and interface is.
(4) Branched degree: according to the increase of the branched degree of the branched polymer, the number of terminal groups in one molecule thereof is increased. By controlling appropriately the interval of branch points, the density of the molecule can be controlled. Low density components can be also concentrated on the surface and interface.
(5) g-factor: the smaller the g-factor defined as a value obtained by dividing the spread of the branched chain by the spread of the linear polymer having the same molecular weight as that of the branched chain is, the more effective for the surface and interface concentration is.
(6) Generation number: in the case of the dendritic polymer, also the generation number is an important parameter controlling the concentration on the surface and interface.
(7) Chemical factor: by introducing a large amount of elements having low surface energy such as fluorine and silicon in one molecule, the surface and interface concentration can be accelerated.

### BRIEF DESCRIPTION OF THE DRAWINGS

[FIG. 1] FIG. 1 is a reaction scheme for synthesizing one example of the dendritic polymer used in the present invention.
[FIG. 2] FIG. 2 illustrates a composition distribution in the film thickness direction when the dendritic polymer is used according to the present invention.
[FIG. 3] FIG. 3 illustrates a composition distribution in the film thickness direction when the hyperbranched comb-like polymer is used according to the present invention.
[FIG. 4] FIG. 4 illustrates a composition distribution in the film thickness direction when the hyperbranched comb-like polymer is used according to the present invention.
[FIG. 5] FIG. 5 illustrates a composition distribution in the film thickness direction when the hyperbranched comb-like polymer is used according to the present invention.
[FIG. 6] FIG. 6 illustrates a composition distribution in the film thickness direction when the hyperbranched polymer is used according to the present invention.
Hereinafter, the characteristics of the present invention are described more specifically referring to Examples which should not be construed as limiting the scope of the present invention.

### [Examples]

### [Example 1]

### Use of Dendritic Polymer

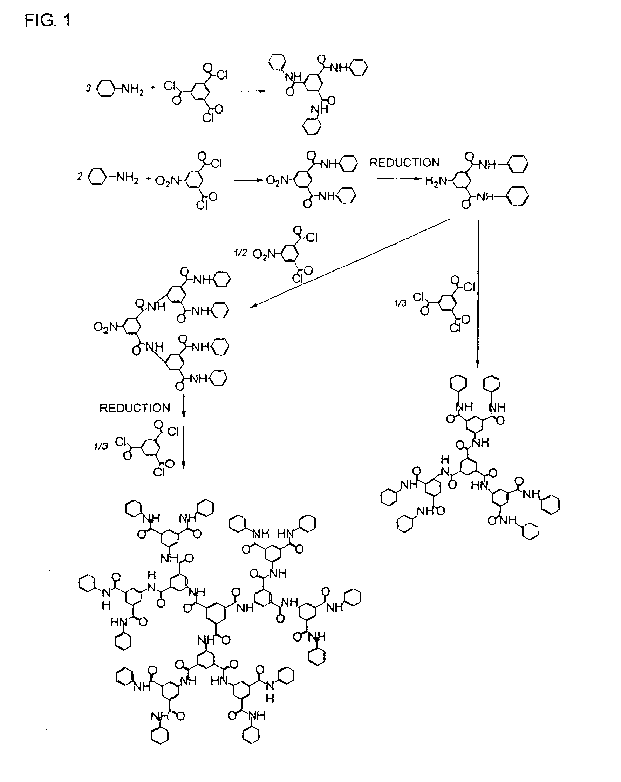

This Example shows the influence of a dendritic polymer used as the branched polymer on the surface and interface of the linear polymer.
As a linear polymer serving as the matrix polymer, a linear polyimide was synthesized from an acid anhydride in which two benzene rings are connected through a hexafluoro isopropylidene group (6FDA: 4,4'-hexafluoropropylidenebis(phthalic anhydride)) and a diamine containing an ether bond (2,4'-ODA: 2,4'-oxydianiline). The obtained polyimide (6FDA/2,4'-ODA) was soluble in a polar solvent such as dimethyl acetoamide (DMAc) and dimethyl formamide (DMA). Further, as the branched polymer, used were polyamidedendrimers of the second, third and fourth generations which are condensed-type dendritic polymers and which have been synthesized from 1,3,5-benzenetricarboxyl trichloride as a core and 5-nitroisophthaloyl chloride as a building block according to a convergent method. The synthesis scheme thereof is shown in FIG. 1 (see References 1 to 3). The obtained polyamidedendrimers were soluble in DMAc and DMF.
(Reference 1): Miller, T.M. ; Neenan, T.X. "Chem. Mater., 2, 346 (1990)"
(Reference 2): Bayliff, P.M. ; Feast, W.J.; Parker, D. "Poly m. Bull., 29, 265 (1992)"
(Reference 3): Backson, S.C. E.; Bayliff, P.M. ; Feast, W.J.; Kenwright, A. M.; Parker, D.; Richards, R.W. "Macromol. Symp., 77, 1 (1994)"

To the linear polyimide (hereinafter, abbreviated as LPI) synthesized as described above, 5% by mass of a polyamidedendrimer (hereinafter, abbreviated as PAD) were mixed (using DMF as a solvent), and the resultant mixture was coated on a silicon substrate to form a film. The film was formed with a thickness of around 150 to 200 nm. After the film formation, for removing the history of the sample preparation, the film was thoroughly subjected to a heat treatment. Since LPI contains fluorine, by a dynamic secondary ion mass spectrometry (DSIMS), the composition distribution in the film thickness (depth) direction can be evaluated.

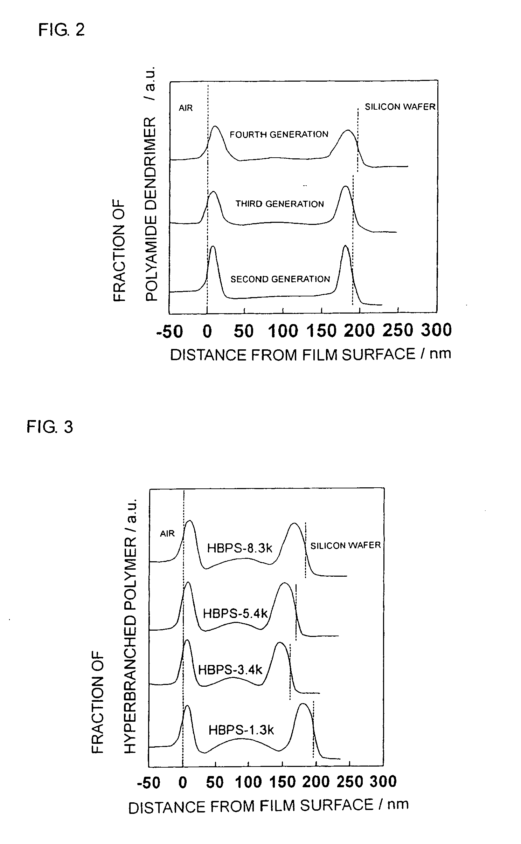

FIG. 2 shows a relationship between the distance from the film surface and the fraction of PAD in a (PAD/LPI) film. As is apparent from FIG. 2, on the film surface and on the interface between the film and the substrate, PAD is selectively concentrated.
Further, it is also apparent that by changing the generation number of PAD, the fraction of PAD on the film surface and film-substrate interface can be controlled.

### [Example 2]

### Use of Comb-like Polymer

This Example shows the influence of a hyperbranched comb-like polymer used as the branched polymer on the surface and interface of the linear polymer.
As the samples, a deuterated linear polystyrene (dPS) having a molecular weight of 1,100,000 and a hyperbranched polystyrene (HBPS) having a molecular weight of 6,000 were used. Table 1 shows characteristics with respect to the molecular weight of HBPS. The total molecular weight of HBPS was fixed at around 1,000,000. In Table 1, DP corresponds to the length of the main chain of a dps and Mₙ, graft-PS corresponds to the length of a side chain extending from the main chain. Accordingly, in the case of HBPS-8.3k, the main chain is short and a side chain part extending therefrom is long. On the contrary, in the case of HBPS-1.3k, reversely, the main chain is long and a side chain part extending therefrom is short.

**Table 1**

| Sample | M_{n, graft-PS} | DP | HBPS | |
|---|---|---|---|---|
| | | | M_{w} | M_{w} / Mₙ |
| HBPS-8.3k | 8.3k | 126 | 1.1M | 1.05 |
| HBPS-5.4k | 5.4k | 203 | 1.0M | 1.04 |
| HBPS-3.4k | 3.4k | 301 | 0.92M | 1.07 |
| HBPS-1.3k | 1.3k | 741 | 1.2M | 1.11 |

dPS was mixed with 5% by mass of HBPS and the resultant mixture was coated on a silicon substrate to form a film. The film was formed with a thickness of around 150 to 200 nm. After the film formation, for removing the history of the sample preparation, the film was thoroughly subjected to a heat treatment. The composition distribution in the film thickness (depth) direction was evaluated by a dynamic secondary ion mass spectrometry (DSIMS).

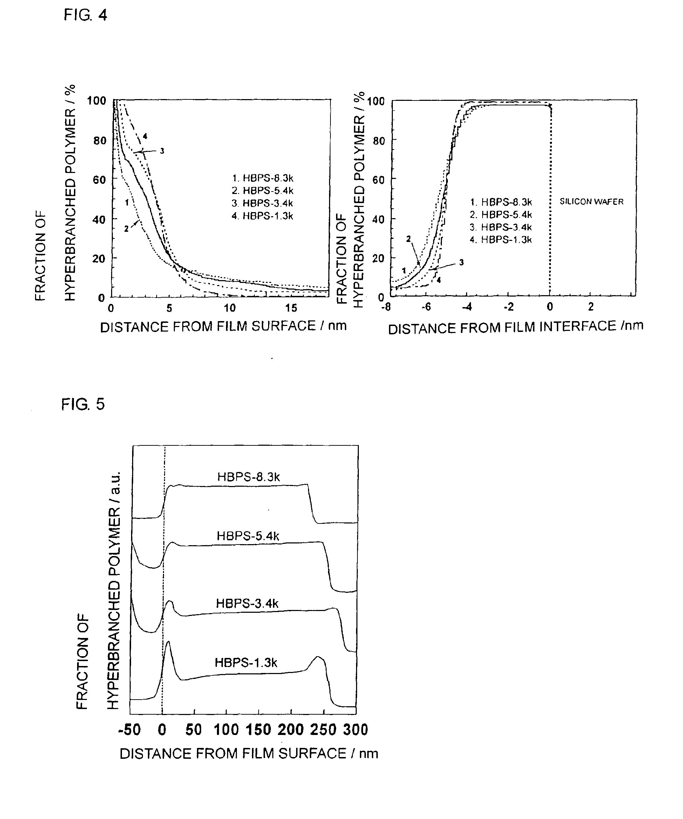

FIG. 3 shows a relationship between the distance from the film surface and the fraction of HBPS in the (HBPS/dPS-1.1M) film prepared as described above. As is apparent from FIG. 3, on the film surface and the substrate-interface, HBPS is selectively concentrated. For anatomizing the composition distribution on the surface and the substrate-interface (in the depth direction), a neutron reflectometry was performed. FIG. 4 shows the result thereof. It is apparent from FIG. 4 that by changing the structure of HBPS, the HBPS concentration on the surface and the interface can be controlled.

In FIG. 3, though dPS having a molecular weight of 1,000,000 as the matrix polymer was mixed with 5% by mass of HBPS, further using dPS having a molecular weight of 6,000 as the matrix polymer, the experiment was performed. FIG. 5 shows a relationship between the distance from the film surface and the fraction of HBPS in the (HBPS/dPS-6k) film prepared as described above. It became apparent that when the length of a HBPS branched chain is the same as or more than that of the matrix polymer, HBPS is concentrated neither on the surface nor the interface.

### [Example 3]

### Use of Hyperbranched Polymer

This Example shows the influence of a hyperbranched polymer (hereinafter, abbreviated as HBP sometimes) used as the branched polymer on the surface and interface of the linear polymer. As the HBP, a HBP (manufactured by Nissan Chemical Industries, Ltd; trade name: Optbeads HPS-H) represented by formula (2) and having a terminal of hydrogen and a HBP (manufactured by Nissan Chemical Industries, Ltd; trade name: Optbeads HPS) represented by formula (3) and having a terminal of a dithiocarbamate group, were used.

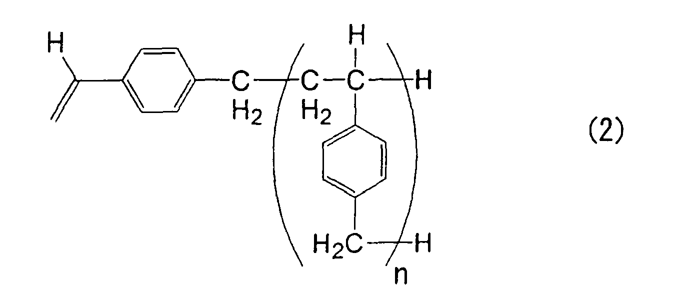

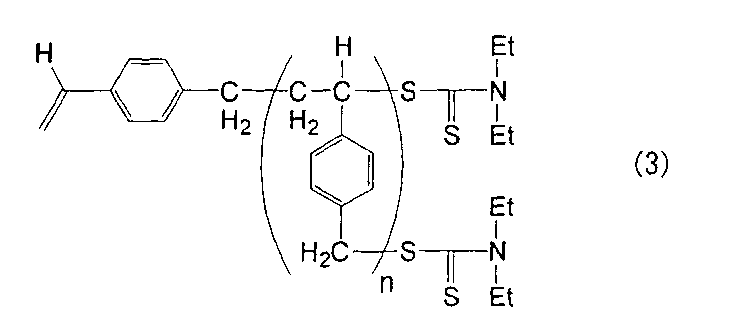

The HBP of the above formula (2) was found to have a weight average molecular weight Mw of 35,000 and the distribution degree Mw/Mn of 5.1 as measured by a gel permeation chromatography in polystyrene-converting. Further, the HBP of the above formula (3) was found to have a weight average molecular weight Mw of 19,000 and the distribution degree Mw/Mn of 3.9 as measured by a gel permeation chromatography in polystyrene-converting.
As a sample of the linear polymer as the matrix polymer, deuterated polystyrene (dPS) having different molecular weights and HBP were used.

dPS was mixed with 5% by mass of HPS-H or HPS and the resultant mixture was coated on a substrate to form a film. As the substrate, a silicon wafer having a naturally oxidized layer or a polyimide was used. The film was formed with a thickness of around 200 nm. After the film formation, for removing the history of the sample preparation, the film was thoroughly subjected to a heat treatment. The composition distribution in the film thickness (depth) direction was evaluated by a dynamic secondary ion mass spectrometry (DSIMS).

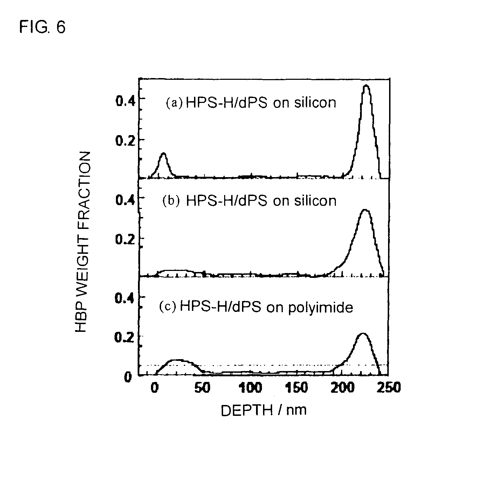

FIG. 6 shows a relationship between the depth (the distance from the film surface) and the fraction of HBP in a (HBP/dPS) film. As is apparent from FIG. 6, on the film surface and substrate-interface, HBP is selectively concentrated. Further, it is also apparent that by varying the terminal group of HBP and/or the substrate, the HBP fraction on the film surface and substrate-interface can be controlled.

### [Example 4]

A mixed solution consisting of 0.19 g of a linear polystyrene having a weight average molecular weight Mw of 97,000, 0.01 g of HBP of formula (3) having a terminal of a dithiocarbamate group and used in Example 3, and 3.8 g of cyclohexanone was prepared. On a silicon wafer having a naturally oxidized layer, this mixed solution was coated by spin-coating and the resultant coating was dried at 150°C for 20 min to form a film. The thickness of the film was 490 nm.
Thereafter, the thin film on the silicon wafer was subjected to a heat treatment at 150°C under vacuum for 15 hours. For evaluating the adhesion between the obtained thin film and the silicon wafer, the peel strength was measured using SAICAS (manufactured by Daipla Wintes Co., Ltd.; trade name: NN-04 type). As measuring conditions, using a cutting lip made of diamond having a width of 1 mm in a constant speed mode, a horizontal speed of 100 nm/sec and a perpendicular speed of 5 nm/sec, the measurement was performed and as the result thereof, the peel strength was found to be 0.12 kN/m.
The peel strength was about twice that of a thin film of a linear polystyrene simple according to the Comparative Example 1. It is considered that this is because by condensing HBP of formula (3) having a terminal of a dithiocarbamate group on the silicon wafer-interface, the peel strength became higher.

### [Comparative Example 1]

A mixed solution consisting of 0.2 g of the linear polystyrene used in Example 4 and 3.8 g of cyclohexanone was prepared. On a silicon wafer having a naturally oxidized layer, this mixed solution was coated by spin-coating and the resultant coating was dried at 150°C for 20 min to form a film. The thickness of the film was 340 nm.
Thereafter, the thin film on the silicon wafer was subjected to a heat treatment at 150°C under vacuum for 15 hours. For evaluating the adhesion between the obtained thin film and the silicon wafer, the peel strength was measured using the same apparatus and measuring condition as those in Example 4. As the result thereof, the peel strength was found to be 0.06 kN/m.

### INDUSTRIAL APPLICABILITY

The present invention can contribute to developing various functional polymers utilized in a large number of industrial fields as providing a simple and inexpensive technology having a general versatility capable of modifying the surface and interface of a polymer.

## Claims

1. A polymer structure comprising:
a matrix polymer made of a linear polymer containing a branched polymer;
wherein the branched polymer is concentrated on the surface and/or interface of the matrix polymer.

2. The polymer structure according to claim 1, wherein the branched polymer is at least one selected from the group consisting of a dendritic polymer, a comb-like polymer and a hyperbranched polymer.

3. The polymer structure according to claim 1, wherein the branched polymer has at least one polar functional group selected from the group consisting of a hydroxyl group, a carboxyl group, an amino group, a thiol group, a halogen group and a dithiocarbamate group.

4. The polymer structure according to claim 2, wherein the hyperbranched polymer is a hyperbranched polymer represented by the following formula (1): 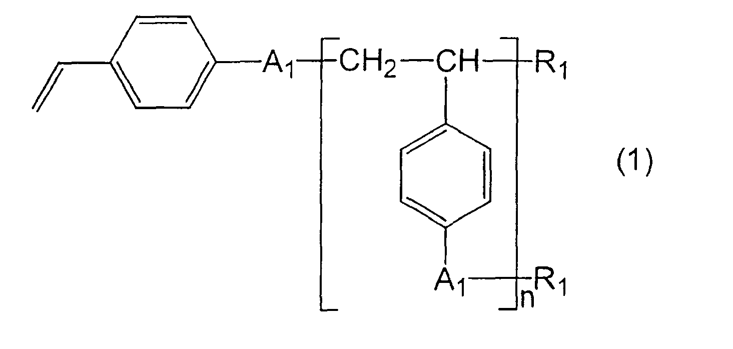 where R₁ represents at least one selected from the group consisting of a hydrogen atom, a halogen atom, a thiol group and a dithiocarbamate group; A represents a (C 1 to 20) linear, branched or cyclic alkylene group which is capable of containing an ether bond or an ester bond; and n represents a number of a recurring unit structure and is an integer of 2 to 100,000.

5. A method for producing the polymer structure according to any one of claims 1 to 4, comprising:
mixing a branched polymer with a linear polymer as a matrix polymer to concentrate the branched polymer on the surface and/or interface of the matrix polymer, so that the surface and/or interface of the polymer structure is modified.
